# EUROPEAN PATENT APPLICATION

(11) **EP 4 312 294 A1**
(43) Date of publication of application: **31.01.2024**
(21) Application number: 23180093.9
(22) Date of filing: 19.06.2023
(51) Int. Cl.: H01M 10/052, H01M 10/0525

(54) **FLAME-RETARDANT ELECTROLYTE, PREPARATION METHOD THEREOF, AND LITHIUM ION BATTERY**

(30) Priority: 29.07.2022 CN 202210906167
(71) Applicant: Hon Hai Precision Industry Co., Ltd., New Taipei City (TW); SolidEdge Solution Inc., Hsinchu 300 (TW)
(72) Inventor: CHANG, CHIH-CHING, Hsinchu 300 (TW); LAI, HSIU-LING, Hsinchu 300 (TW); LAI, HONG-ZHENG, Hsinchu 300 (TW); CHANG, TSENG-LUNG, Hsinchu 300 (TW)
(74) Representative: Zaboliene, Reda

(57) **Abstract**

The present application provides a flame-retardant electrolyte. The flame-retardant electrolyte includes a specific solvent; a lithium salt; and a fluorinated solvent. The specific solvent is carbonate solvent, ether solvent, succinonitrile, sulfolane, tetraglyme, ionic liquid or a combination thereof. Or, the flame-retardant electrolyte comprises 1-Butyl-1-methylpyrrolidinium bis(trifluoromethylsulfonyl)imide, lithium salt, and carbonate solvent.

## Description

### CROSS-REFERENCE TO RELATED APPLICATIONS

This application claims all benefits from the Chinese Patent Application No. 202210906167.9, filed on July 29, 2022, in the China National Intellectual Property Administration, the disclosure of which is incorporated herein by reference.

### BACKGROUND

### 1. Technical Field

The present application relates to a flame-retardant electrolyte, preparation method, and a lithium-ion battery.

### 2. Discussion of Related Art

In the fields of electric vehicles and energy storage systems, lithium-ion batteries are in great demand, but the carbonate-based electrolytes in the lithium-ion batteries have a safety problem of burning. Additives with flame retardant effect can improve the flame retardant characteristics of the electrolyte, but it is easy to cause the degradation of battery performance. Therefore, a flame-retardant electrolyte with excellent performance is expected, which can improve the safety of the battery without reducing the performance of the battery.

At present, common additives with flame retardant effect can guarantee the safety of the electrolyte. The electrolyte can be non-flammable phosphate compound, such as dimethyl phosphate, triethyl phosphate and trimethyl phosphate. However, poor battery stability is still a common problem due to a strong catalytic activity of graphite as the electrode of the battery.

Therefore, there is room for improvement in the art.

### BRIEF DESCRIPTION OF THE DRAWINGS

In order to illustrate the technical solutions of the embodiments of the present application more clearly, the accompanying drawings in the embodiments will be briefly introduced below. It should be understood that the following drawings only show some embodiments of the present application, and therefore should not be seen as the limiting the scope. For one of ordinary skill in the art, other related drawings can also be obtained from these drawings without any creative work.

Implementations of the present technology will now be described, by way of embodiments, with reference to the attached figures, wherein:
FIG. 1 shows a schematic view of a lithium ion battery in one embodiment.
FIG. 2 shows a charge-discharge curves of the lithium ion battery of the first three cycles in an embodiment.
FIG. 3 shows a charge-discharge curve of a conventional lithium ion battery after formation.
FIG. 4 shows a charge-discharge curve of the lithium ion battery after formation in an embodiment.

### DETAILED DESCRIPTION OF EXEMPLARY EMBODIMENTS

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. The drawings are not necessarily to scale, and the proportions of certain parts may be exaggerated better illustrate details and features. The description is not to be considered as limiting the scope of the embodiments described herein.

The term "outside" refers to a region that is beyond the outermost confines of a physical object. The term "inside" indicates that at least a portion of a region is partially contained within a boundary formed by the object. The term "substantially" is defined to essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; it specifically indicates open-ended inclusion or membership in a so-described combination, group, series and the like. It should be noted that references to "an" or "one" embodiment in this disclosure are not necessarily to the same embodiment, and such references mean at least one.

A first embodiment of a flame-retardant electrolyte is provided. The flame-retardant electrolyte comprises a specific solvent, a lithium salt and a fluorinated solvent. In one embodiment, the fluorinated solvent is a fluoroethylene carbonate. The concentration of the lithium salt in the flame-retardant electrolyte is in a range from 5 mol/kg to 7 mol/kg. In one embodiment, the concentration of the lithium salt in the flame-retardant electrolyte is in a range from 5 mol/kg to 6 mol/kg. The mass ratio of the fluorinated solvent ranges from 1%-20%. In one embodiment, the mass ratio of the fluorinated solvent is 10%. The fluorinated solvent can avoid the precipitation of the lithium salt and improve the stability of a negative electrode of the lithium ion battery. In one embodiment, the flame-retardant electrolyte consists of the specific solvent, the lithium salt and the fluoroethylene carbonate, and the mass ratio of the fluoroethylene carbonate is 10%.

The specific solvent can be carbonate solvent, ether solvent, succinonitrile, sulfolane, tetraglyme, ionic liquid or a combination thereof. The ionic liquid can be N-Butyl, methylpyrrolidinium bis(trifluoromethylsulfonyl)imide, 1-butyl-3-methylimidazolium bis[(trifluoromethyl)sulfonyl]imide, 1-ethyl-3-methylimidazolium bis[(trifluoromethyl)sulfonyl]imide, N-Butyl, methylpyrrolidinium bis(fluorosulfonyl)imide, 1-butyl-3-methylimidazolium bis[fluorosulfonyl]imide, 1-ethyl-3-methylimidazolium bis[fluorosulfonyl]imide.

In one embodiment, the specific solvent comprises carbonate solvent and ether solvent. In another embodiment, the specific solvent consists of carbonate solvent and ether solvent.

The carbonate solvent can be cyclic carbonates and/ or linear carbonates. The cyclic carbonates can be ethylene carbonate, propylene carbonate or combinations thereof. The linear carbonates can be dimethyl carbonate, diethyl carbonate, ethyl methyl carbonate or combinations thereof.

The ether solvent can be 1,2-dimethoxyethane, diethylene glycol dimethyl ether, triethylene glycol dimethyl ether, tetraethylene glycol dimethyl ether or a combination thereof.

The lithium salt can be lithium bis(trifluoromethanesulfonyl)imide (LiN(CF3SO2)2, LiTFSI), lithium bis(fluorosulfonyl)imide (LiNO4S2F2, LiFSI), lithium hexafluorophosphate (LiPF6), lithium tetrafluoroborate (LiBF4) or combinations thereof.

In one embodiment, the specific solvent consists of ethylene carbonate (EC) and dimethyl ether (DME), and the molar ratio of ethylene carbonate and dimethyl ether is in a range of 10:1 to 1:10. In one embodiment, the molar ratio of ethylene carbonate and dimethyl ether is 1:2. In one embodiment, the lithium salt is LiTFSI, the flame-retardant electrolyte consists of a mixture of EC and DME, LiTFSI and fluoroethylene carbonate (FEC), and the concentration of lithium salt (LiTFSI) is in a range from 5 mol/kg to 6 mol/kg.

A second embodiment of a method of making the flame-retardant electrolyte comprises:
51, providing the specific solvent;
S2, adding the lithium salt into the specific solvent, and stirring; and
S3, adding the fluorinated solvent after the lithium salt is dissolved, and stirring.

In step S1, in one embodiment, the specific solvent is composed of the carbonate solvent such as EC and the ether solvent such as DME. Since the carbonate solvent such as EC is solid when the temperature is low, it is necessary to ensure that the carbonate solvent such as EC and ether solvent such as DME are completely mixed to obtain the specific solvent before proceeding to the subsequent steps. The order of step S2 and step S3 is not limited. That is, the order in which the specific solvents, the lithium salts, and the fluorinated solvent are mixed and dissolved with each other is not limited.

In one embodiment, the carbonate solvent and the ether solvent are organic solvents, and the carbonate solvent and the ether solvent are mixed in a certain volume ratio. Carbonate organic solvents are solid at normal temperature, and can be dissolved by heating to above 60 degrees Celsius for about two hours. In one embodiment, the carbonate solvent is EC, the ether solvent is DME, and the volume ratio of the EC to the DME is 1:2.

In step S2, the lithium salt is added into the specific solvent to increase a large amount of lithium ions. A force between the lithium ions and the specific solvent can prevent the specific solvent molecules from being vaporized, thereby improving the flame retardant characteristics of the flame-retardant electrolyte. In one embodiment, the lithium salt is LiTFSI.

In step S3, in one embodiment, the fluorinated solvent is FEC. The fluorinated solvent can avoid the precipitation of the lithium salt such as LiTFSI and improve the stability of negative electrodes. And the fluorinated solvent can enhance the force between the lithium ions and the specific solvent, and prevent the specific solvent molecules from being vaporized, so that the flame-retardant electrolyte is not flammable.

The following are specific examples of the method for making the flame-retardant electrolyte.

### Example

First, in the environment where the saturated water vapor pressure is lower than 2 Pascals, the EC and DME are respectively provided. The EC and DME are mixed and stirred evenly, to obtain the specific solvent as an ion-conducting medium. The volume ratio of the EC to the DME is 1:2. The EC and the DME are put into a quantitative bottle for standard volume quantification and stir evenly. Wherein the EC is usually solid at room temperature, and is dissolved by heating to above 60 degrees Celsius for about two hours in advance.

Second, the lithium salt is weighed, then the lithium salt is added to the specific solvent, and continuously stirred until the lithium salt is evenly dissolved, obtaining a uniformly mixed solution. The concentration of the lithium salt is 5.14 moles per kilogram.

Third, an appropriate amount of FEC is added into the uniformly mixed solution and continuously stirred to obtain the flame-retardant electrolyte.

Table 1 shows a comparison between the flame-retardant electrolyte and the control groups. Table 1 shows test results of the flame-retardant electrolyte and the control groups. The test results shows the combustion of the electrolyte I to electrolyte XII when an open flame contacts the electrolyte I to electrolyte XII in table 1 for five seconds.

**Table 1: a comparison between the flame-retardant electrolyte and the control groups**

| electro lyte | lithium salt | concentration of the lithium salt | the composition and ratio of the specific solvent | test results |
|---|---|---|---|---|
| I | LiTFSI | ILE-P/LiTFSI=8/2 molar ratio | ILE-P/DEC=8/2 (weight ratio) | flame retardant |
| II | LiTFSI | 2.3 mol/kg | EC/DME=1/2 molar ratio | flammable |
| III | LiTFSI | 2.3 mol/kg | II+10wt% FEC | flammable |
| IV | LiTFSI | 2.3 mol/kg | II+5wt% FEC | flammable |
| V | LiTFSI | 2.3 mol/kg | II+10wt% FEC +1wt% LiDFOB | flammable |
| VI | LiTFSI | 5.14 mol/kg | EC/DME=1/2 molar ratio | flame retardant |
| VII | LiTFSI | 5.14 mol/kg | VI+10wt% FEC+1wt% LiDFOB | flame retardant |
| VIII | LiTFSI | 3 mol/kg | EC/DME=1/2 molar ratio | flammable |
| IX | LiTFSI | 4 mol/kg | EC/DME=1/2 molar ratio | flammable |
| X | LiTFSI | 2.3 mol/kg | EC/DME=1/1 molar ratio | flammable |
| XI | LiTFSI | 2.3 mol/kg | EC/DME=2/1 molar ratio | flammable |
| XII | LiTFSI | 5.14 mol/kg | VI+10wt% FEC | flame retardant |

In Table 1, EC represents ethylene carbonate, ILE-P represents 1-Butyl-1-methylpyrrolidinium bis(trifluoromethylsulfonyl)imide, DME represents 1,2-dimethoxyethane, DEC represents diethyl carbonate, LiTFSI represents lithium bistrifluoromethanesulfonyl imide, LiDFOB represents lithium difluoro(oxalato)borate.

It can be seen from Table 1 that when the specific solvent is a mixture of EC and DME with a molar ratio of 1:2, and the concentration of the lithium salt is 5.14 mol/kg, the electrolyte is flame retardant.

In can be seen from the electrolyte I that when the specific solvent is a mixture of ILE-P and DEC with a mass ratio of 8:2, a molar ratio of ILE-P to LiTFSI is 8:2, and the molar concentration of LiTFSI is 0.59 mol/kg, the electrolyte I is flame retardant. Thus, the flame-retardant electrolyte can also comprise ILE-P, the lithium salt and the carbonate solvent. In one embodiment, the flame-retardant electrolyte consists of ILE-P, the lithium salt (such as LiTFSI) and the carbonate solvent (such as DEC).

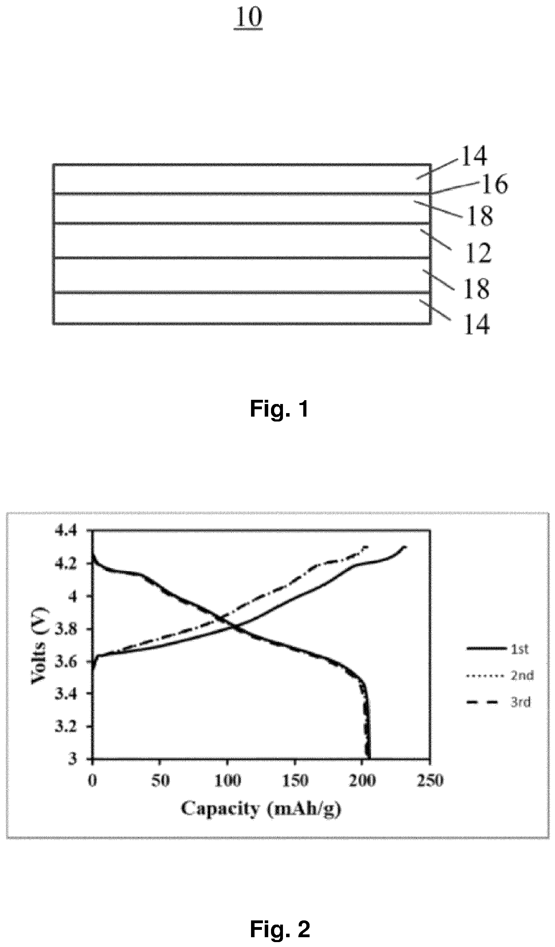

Referring to FIG.1, the present application further provides a lithium ion battery 10. The lithium ion battery 10 includes a positive electrode 12, a negative electrode 14, a flame-retardant electrolyte 16, and a composite solid electrolyte membrane 18.

The material of the positive electrode 12 is not limited, and the positive electrode 12 can be lithium nickel manganese cobalt oxide, lithium nickel manganese oxide, etc. The material of the negative electrode 14 is not limited, and the negative electrode 14 can be graphite, silicon carbon and lithium metal, etc. The flame-retardant electrolyte 16 has been described in detail above.

The material of the composite solid electrolyte membrane 18 comprises lithium salt compound, polymer material, solid electrolyte and plasticizer. In one embodiment, the composite solid electrolyte membrane 18 consists of lithium salt compound, polymer material, solid electrolyte and plasticizer. The lithium salt compound can be lithium fluoride (LiF), LiFSI, LiTFSI, lithium bis(perfluoroethylsulfonylimide) (Li(C2F5SO2)2N, LiBETI), lithium dioxalate borate (LiB(C2O4)2), LiBOB), or a combination thereof. The polymer material can be PVDF, PVDF-HFP, PVA, PLA, PEG, PMMA, PMA, PAA, or a combination thereof. The solid electrolyte can be LLZO, LLZTO, LATP, or a combination thereof. The plasticizer can be ethylene carbonate, succinonitrile, sulfolane, tetraglyme, or a combination thereof. It is easy to understand that the lithium salt compound can be a conventional lithium salt compound.

In one embodiment, PVDF, PMMA, lithium salt compound, solid electrolyte, and plasticizer are mixed and coated on a substrate, and then baked to form the composite solid electrolyte membrane 18.

In a dry environment, the negative electrode 14, the composite solid electrolyte membrane 18, the positive electrode 12, the composite solid electrolyte membrane 18, and the negative electrode 14 are sequentially formed into a multilayer battery cell. Then, in a vacuum environment, the flame-retardant electrolyte is injected into the multilayer battery cell for formation to obtain the lithium ion battery 10. The electrochemical properties of the lithium ion battery 10 are verified below.

FIG.2 shows the charge-discharge curve of the lithium ion battery 10. It can be seen from FIG.2 that after using the flame-retardant electrolyte, the discharge capacity of the lithium ion battery 10 is 205 mAh/g, which is greater than 200 mAh/g, and the irreversibility of the first cycle is less than 12%. Thus, the performance of the lithium ion battery 10 is comparable to current materials. Thus, the lithium ion battery 10 adopting the flame-retardant electrolyte has good battery performance.

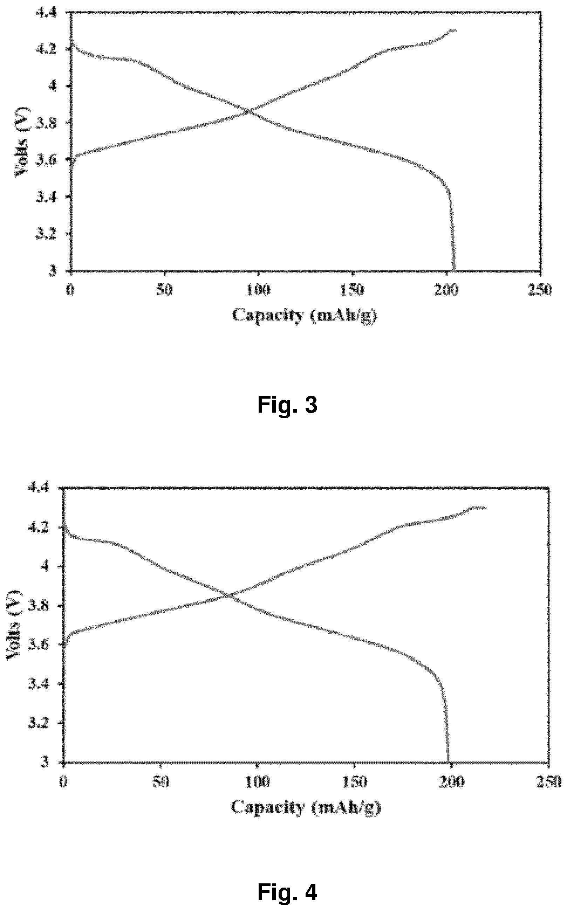

FIG.3 shows the charge-discharge curve of the conventional lithium ion battery, and FIG.4 shows the charge-discharge curve of the lithium ion battery 10. Compared with the lithium ion battery 10, the conventional lithium ion battery comprises a traditional separator and the flame-retardant electrolyte (the electrolyte VII in Table 1), while the lithium ion battery 10 comprises the composite solid electrolyte membrane 18 and the flame-retardant electrolyte (the electrolyte VII in Table 1), the rest of the conventional lithium ion battery and the lithium ion battery 10 are the same. In can be seen from FIG.3 and FIG.4 that the performance of the composite solid electrolyte membrane 18 is equivalent to that of the traditional separator. Figure 2, figure 3 and figure 4 are all the charge-discharge curve of batteries using the flame-retardant electrolytes. Figure 2 shows the charge-discharge curves of the first three cycles, and figures 3 and 4 show the charge-discharge curves after formation. It can be seen from figures 3 and 4 that in the lithium ion battery 10, the flame-retardant electrolyte and the composite solid electrolyte membrane are matched with each other, so that the charge-discharge performance of the lithium ion battery 10 is equivalent to that of a traditional lithium ion battery using a traditional separator, and the capacity of the lithium ion battery 10 can reach 200 mAh/g.

The flame-retardant electrolyte, the method for making the flame-retardant electrolyte, and the lithium ion battery using the flame-retardant electrolyte have following advantages.

First, the flame-retardant electrolyte of the present application comprises the specific solvent, and the concentration of the lithium salt is increased to above 5 mol/kg, appropriate amount of additives are added to the flame-retardant electrolyte, so that the flame-retardant electrolyte can avoid the lithium salt precipitation and the battery performance degradation, and the flame-retardant electrolyte has flame retardant properties.

Second, the flame-retardant electrolyte, the composite solid electrolyte membrane, the positive electrodes and the negative electrodes form the lithium ion battery with high energy and high safety.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure up to, and including, the full extent established by the broad general meaning of the terms used in the claims.

The above embodiments are only used to illustrate the technical solutions of the present application rather than limitations. Although the present application has been described in detail with reference to the above preferred embodiments, one of ordinary skill in the art should understand that the technical solutions of the present application may be modified or equivalently replaced without departing from the spirit and scope of the technical solutions of the present application.

## Claims

1. A flame-retardant electrolyte comprising:
a specific solvent;
a lithium salt; and
a fluorinated solvent;
wherein the specific solvent is carbonate solvent, ether solvent, succinonitrile, sulfolane, tetraglyme, ionic liquid or a combination thereof.

2. The flame-retardant electrolyte of claim 1, wherein the specific solvent comprises carbonate solvent and ether solvent, or the specific solvent consists of carbonate solvent and ether solvent.

3. The flame-retardant electrolyte of claim 1, wherein the carbonate solvent is a cyclic carbonate and/or a linear carbonate, the cyclic carbonate is ethylene carbonate, propylene carbonate, or combinations thereof, and the linear
carbonate is dimethyl carbonate, diethyl carbonate, ethyl methyl carbonate, or combinations thereof.

4. The flame-retardant electrolyte of claim 1, wherein the ether solvent is 1,2-dimethoxyethane, diethylene glycol dimethyl ether, triethylene glycol dimethyl ether, tetraethylene glycol dimethyl ether, or a combination thereof.

5. The flame-retardant electrolyte of claim 1, wherein concentration of the lithium salt in the flame-retardant electrolyte is in a range from 5 moles per kilogram to 7 moles per kilogram.

6. The flame-retardant electrolyte of claim 5, wherein the lithium salt is lithium bis(trifluoromethanesulfonyl)imide, lithium bis(fluorosulfonyl)imide, lithium hexafluorophosphate, lithium tetrafluoroborate, or a combination thereof.

7. The flame-retardant electrolyte of claim 1, wherein the fluorinated solvent is fluoroethylene carbonate, 1-Butyl-1-methylpyrrolidinium bis(trifluoromethylsulfonyl)imide.

8. The flame-retardant electrolyte of claim 1, wherein the specific solvent consists of ethylene carbonate and dimethyl ether, and a molar ratio of the ethylene carbonate and the dimethyl ether is in a range of 10:1 to 1:10.

9. A lithium ion battery comprising:
a positive electrode;
a negative electrode;
a flame-retardant electrolyte; and
a composite solid electrolyte membrane;
wherein the flame-retardant electrolyte comprises a specific solvent, a lithium salt, and a fluorinated solvent, wherein the specific solvent is carbonate solvent, ether solvent, succinonitrile, sulfolane, tetraglyme, ionic liquid or a combination thereof.

10. The lithium ion battery of claim 9, wherein the specific solvent comprises carbonate solvent and ether solvent, or the specific solvent consists of carbonate solvent and ether solvent.

11. The lithium ion battery of claim 9, wherein a concentration of the lithium salt in the flame-retardant electrolyte is in a range from 5 moles per kilogram to 7 moles per kilogram.

12. The lithium ion battery of claim 11, wherein the lithium salt is lithium bis(trifluoromethanesulfonyl)imide, lithium bis (fluorosulfonyl) imide, lithium hexafluorophosphate, lithium tetrafluoroborate, or a combination thereof.

13. The lithium ion battery of claim 9, wherein the specific solvent consists of ethylene carbonate and dimethyl ether, and a molar ratio of the ethylene carbonate and the dimethyl ether is in a range of 10:1 to 1:10.

14. The lithium ion battery of claim 9, wherein the composite solid electrolyte membrane consists of lithium salt compound, polymer material, solid electrolyte and plasticizer.

15. A method of making a flame-retardant electrolyte comprising:
providing a specific solvent, wherein the specific solvent is carbonate solvent, ether solvent, succinonitrile, sulfolane, tetraglyme, ionic liquid, or a combination thereof;
adding a lithium salt into the specific solvent; and
adding a fluorinated solvent into the specific solvent after the lithium salt is dissolved.
